# EUROPEAN PATENT SPECIFICATION

(11) **EP 2 430 307 B1**
(45) Date of publication and mention of the grant of the patent: **07.03.2018**
(21) Application number: 10709851.9
(22) Date of filing: 24.03.2010
(51) Int. Cl.: F04B 53/16, F04B 1/04, F16K 11/10, F02M 63/00, F02M 59/46

(54) **VALVE UNIT FOR A HIGH-PRESSURE PISTON FUEL PUMP AND PUMP COMPRISING THIS VALVE UNIT**
VENTILEINHEIT FÜR EINE HOCHDRUCKKOLBEN-KRAFTSTOFFPUMPE UND PUMPE MIT DIESER VENTILEINHEIT
UNITÉ DE SOUPAPE POUR UNE POMPE À CARBURANT À PISTON HAUTE PRESSION ET POMPE COMPRENANT CETTE UNITÉ DE SOUPAPE

(30) Priority: 13.05.2009 IT MI20090830
(43) Date of publication of application: 21.03.2012
(73) Proprietor: Robert Bosch GmbH, 70442 Stuttgart (DE)
(72) Inventor: LOIUDICE, Nicola, I-70022 Altamura (BA) (IT)
(86) International application number: PCT/EP2010/053827
(87) International publication number: WO 2010/130502

(56) References cited:
- EP-A- 0 516 196
- EP-A1- 0 723 077
- GB-A- 278 686
- GB-A- 513 349
- US-A- 3 266 424
- US-A- 4 491 111
- US-A- 4 846 631
- US-B1- 6 186 120

## Description

The present invention relates to a valve unit for controlling the supply and delivery of fuel to and from a compression chamber of a high-pressure piston pump and a high-pressure piston pump comprising this valve unit.
Such a valve unit is known from the document EP 0 723 077 A1. This valve unit for controlling the supply and delivery of fuel to and from a compression chamber of a high-pressure piston pump comprises a valve body. A first check valve having a first valve seat which extends along a first axis is formed in said valve body and can be connected to the compression chamber and to a fuel delivery duct. The valve unit comprises a second check valve having a second valve seat which extends along a second axis is formed in said valve body and can be connected to the compression chamber and to a fuel supply duct. The valve unit comprises a first connecting duct formed in said valve body and capable of putting the compression chamber, the first valve seat and the second valve seat in communication. The first valve seat and the second valve seat are arranged side by side in the valve body. Therefore the valve body needs to have a sufficient size to locate both valve seats and a large number of drilling operations is necessary to provide the valve seats. Furthermore the valve body is considerably weakened in structural terms because of the valve seats located side by side.
Such a valve unit is also known from the documents US 4 491 111 A, US 4 846 631 A and EP 0 516 196 A.
One object of the present invention is to provide a valve unit which can minimize the drawbacks of the prior art as mentioned above.
The present invention makes it possible to reduce the size of the valve unit, to reduce the number of drilling operations necessary to manufacture the valve unit and to enhance the structural stability of the valve body.

Another object of the present invention is to provide a high-pressure piston pump capable of minimizing the drawbacks of the known art.

According to the present invention, a valve unit is provided for controlling the supply and delivery of fuel to and from a compression chamber of a high-pressure piston pump according to claim 1. Further characteristics and advantages of the present invention will be made clear by the following description of non-limiting examples of embodiment of the invention, with reference to the attached drawings, in which:
- Figure 1 is a sectional view, with parts removed for clarity, of a piston pump for supplying fuel to an internal combustion engine made according to the present invention;
- Figure 2 is a sectional view, with parts removed for clarity, of a valve unit made according to the present invention;
- Figure 3 is a sectional view, with parts removed for clarity, of a detail of the valve unit of Figure 2, taken along the section lines III-III; and
- Figure 4 is a sectional view, with parts removed for clarity, of a valve unit made according to a second embodiment of the present invention.

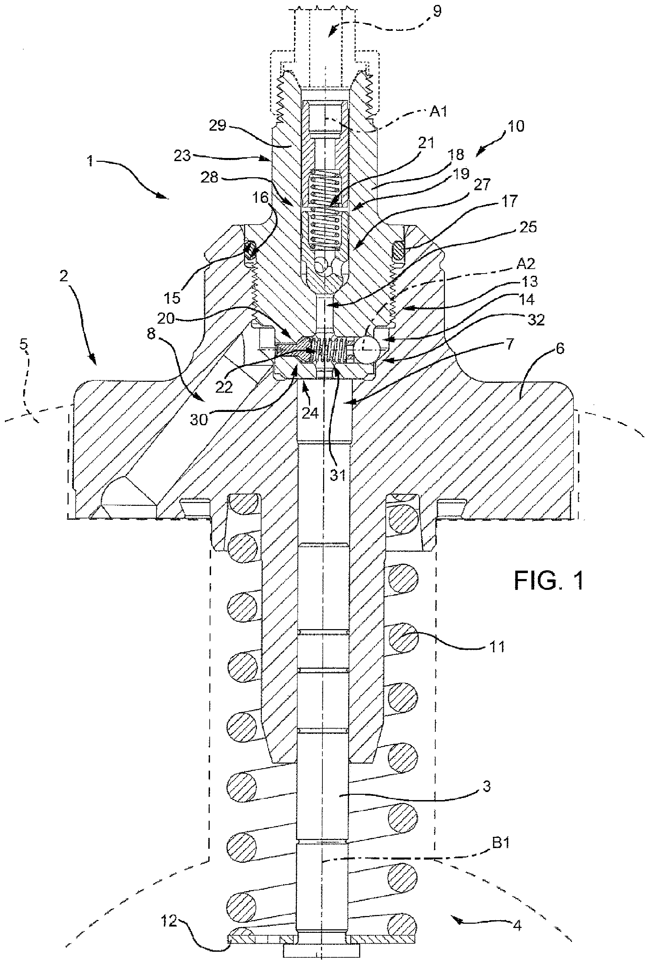

In Figure 1, the reference numeral 1 indicates a piston pump for supplying fuel, preferably diesel oil, to an internal combustion engine which is not shown in the attached drawings. The piston pump 1 has a high compression ratio and can transport the fuel at pressures of more than 2000 bar.
The piston pump 1 comprises a pump housing 2, three pistons 3, only one of which is shown in Figure 1, and a drive unit 4 for moving the pistons 3 simultaneously with respect to the pump housing 2. The pump housing 2 is the supporting structure of the piston pump 1 and, in this instance, comprises a central housing 5 and three heads 6 (only one of which is shown in Figure 1) attached to the main housing 5. Each head 6 has a corresponding compression chamber 7 in which a corresponding piston 3 can move. The piston pump 1 comprises, for each compression chamber 7, a supply duct 8, a delivery duct 9, and a valve unit 10 for controlling the supply and delivery to and from the compression chamber 7.

The drive unit 4 comprises a mechanism (not shown) which causes the piston 3 to complete a compression stroke in the compression chamber 7, and a spring 11 compressed between the pump housing 2 and a ring 12 associated with the piston 3 to provide the intake stroke of the corresponding piston 3.

The compression chamber 7 extends along an axis B1 and has a cylindrical shape, with a slight increase in diameter in the proximity of the head. The compression chamber is partially delimited by the valve unit 10. The piston 3 is coupled in such a way that it can slide in the compression chamber along the head 6.

The pump housing 2, or more precisely the head 6, comprises a housing seat 13, which communicates with the compression chamber 7 and can house the valve unit 10. The valve unit 10 and the housing seat 13 are shaped in such a way as to form an annular chamber 14 which communicates directly with the supply duct 8 which is formed, at least partially, in the pump housing 2. The head 6 and the valve unit 10 are threaded to provide a quick connection and have shoulders 15 and 16 respectively, between which a gasket 17 is interposed.

The delivery duct 9 is substantially formed by a tube which is positioned outside the pump housing 2 and is connected directly to the valve unit 10 by means of a threaded connector.

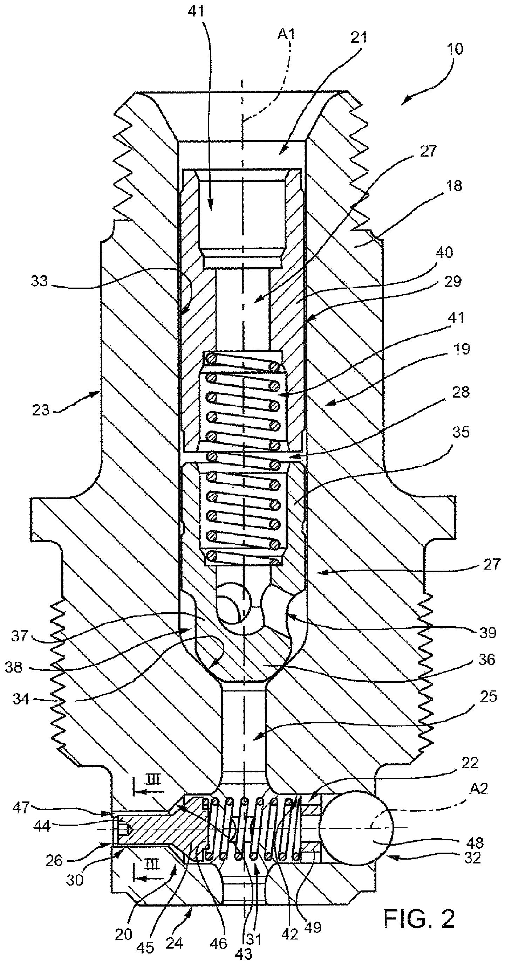

The valve unit 10 comprises a valve body 18; a high-pressure, or delivery, check valve 19; and a low-pressure, or supply, check valve 20. With reference to Figure 2, the check valve 19 has a first valve seat 21, which extends along an axis A1, is formed in the valve body 18, and can be connected to the compression chamber 7 (Figure 1) and to the delivery duct 9 (Figure 1), while the check valve 20 has a valve seat 22 which extends along an axis A2, is formed in the valve body 18, and can be connected to the compression chamber 7 and to the supply duct 8 (Figure 1).

The valve body 18 is of elongate cylindrical shape about the axis A1 and has a partially threaded lateral face 23 and an annular face 24 which partially delimits the compression chamber 7 as shown in Figure 1.

The valve seat 21 can be positioned selectively in communication with the compression chamber 7 (Figure 1) by means of a connecting duct 25, which extends from the annular face 24 to the valve seat 21 and is positioned along the axis A1.

The valve seat 22 can be positioned selectively in communication with the annular chamber 14 by means of a connecting duct 26, which extends from the cylindrical face 23 to the valve seat 22 and is positioned along the axis A2. The valve seat 22 intersects the connecting duct 25 and is constantly in communication with the compression chamber 7 (Figure 1) by means of the connecting duct 25. In the specific embodiment shown in the attached drawings, the axes A1 and A2 are perpendicular to each other, while the axis A1 is aligned with the axis B1.

The high-pressure check valve 19 comprises, in addition to the valve body 18, a plug 27, a resilient member 28, and a locking member 29, while the check valve 20 comprises, in addition to the valve body 18, a plug 30, a resilient member 31, and a locking device.

In greater detail, the valve seat 21 is delimited at least partially by a cylindrical face 33 parallel to the axis A1 and a bearing face 34, preferably of truncated conical shape, which is transverse with respect to the axis A1. The plug 27 is movable along the axis A1 in the valve seat 21, while the resilient member 28 pushes the plug 27 so that it bears against the bearing face 34. The plug 27 comprises a guide portion 35 which can slide along the cylindrical face 33, a plug portion 36 which can be selectively positioned to bear against the bearing face 34, and a recessed portion 37 which is positioned between the guide portion 35 and the plug portion 36 and which can form an annular chamber 38 between the plug 27 and the valve seat 21.

The plug 27 is cup-shaped and comprises three apertures 39 (only two of which are shown in Figure 2) to enable the annular chamber 38 to communicate with a compartment inside the plug 27.

The plug 27 can house part of the member 28 in its inner compartment.

The locking member 29 is fixed in the valve seat 21 in such a way as to preload the resilient member 28 against the plug 27. In particular, the locking member 29 comprises a sleeve 40, which is force-fitted in the valve seat 21 and has a seat 41 for housing part of the resilient member 28. In fact, the sleeve 40 has two seats 41 which are opposed and identical, such that the sleeve 40 does not have a direction of mounting.

The resilient member 28 is housed partially in the plug 27 and partially in the locking member 29, and has a small intermediate part which is free, at least in the closed position of the check valve 19. Because of this configuration, the locking member 29 also has the function of limiting the maximum travel of the plug 27, which, in the position of maximum opening, not shown in the attached drawings, has its guide portion 36 bearing against the sleeve 40.

The resilient member 28 is a helical spring, and therefore the inner compartment of the plug 27 communicates with an inner compartment of the sleeve 40 and with the delivery duct 9 of Figure 1.

The second valve seat 22 is delimited at least partially by a cylindrical face 42 parallel to the axis A2 and a bearing face 43 which is transverse with respect to the axis A2.

The plug 30 is movable along the axis A2 in the second valve seat 21 and is pressed by the resilient member 29 against the bearing face 43.

The plug 30 comprises a guide portion 44, which is positioned in the connecting duct 26 and can slide along the connecting duct 26, which is coaxial with the cylindrical face 42, but has dimensions transverse to the axis A2 which are smaller than the cylindrical face 42; a plug portion 45, which has a truncated conical shape and is positioned next to the bearing face 43; and a connecting portion 46, which has an annular seat for housing the resilient member 31.

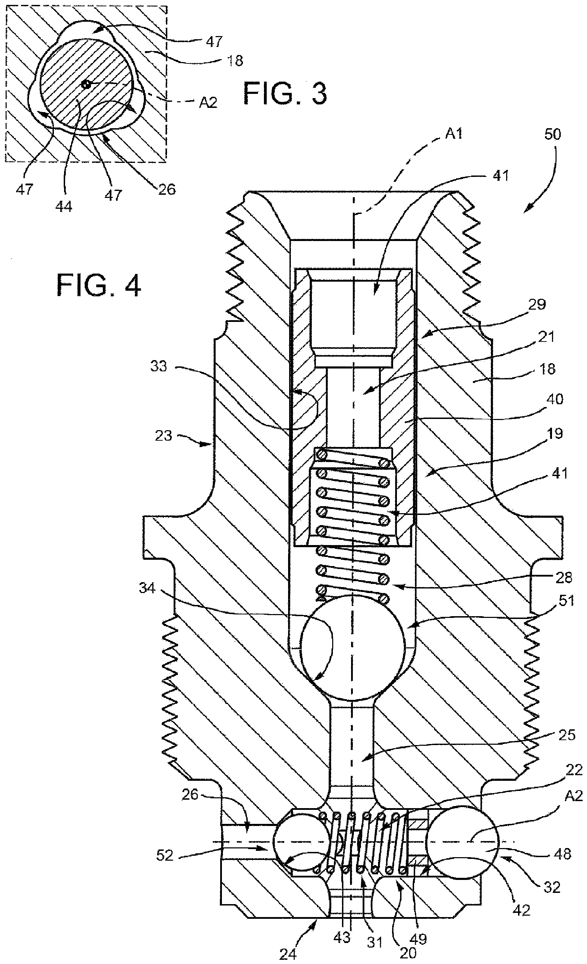

As shown more fully in Figure 3, the connecting duct 25 comprises longitudinal channels 47 which allow the fuel to flow when the plug 30 is placed in the open position.

The locking device 32 comprises a sealing member 48, in this instance a ball, which is fixed by an interference fit in the valve seat 22, and a spring support 49, which is positioned between the sealing element 48 and the resilient member 31 and has the function of regulating the opening pressure of the check valve 20. The spring support 49 is a pierced disc which is fixed by an interference fit in the valve seat 22. The sealing element 48 provides a hydraulic seal and, owing to the high pressure which is cyclically present in the valve seat 22, can be subject to small movements along the axis A2. Conversely, the spring support 49 enables the preloading of the resilient member 31 to be maintained even when the sealing element 48 moves slightly. This is because the spring support 49 is fixed in the valve seat 22, and, because of the holes, the pressure in the valve seat 22 acts on opposite ends of the spring support 49.

The resilient member 31 is a helical spring which can allow the fuel to flow between its turns, since it is placed in a position perpendicular to the connecting duct 25 and partially occupies the connecting duct 25.

In use, the opening and closing of the check valves 19 and 20 is caused by the pressure difference between the opposite ends of the corresponding plugs 27 and 30.

In the intake phase shown in Figures 1 and 2, the pressure in the compression chamber 7 falls below the pressure in the supply duct 8. The check valve 20 therefore opens, while the high pressure in the delivery duct 9 keeps the plug 27 of the check valve 19 in the closed position.

In the compression phase, the pressure in the compression chamber increases until it exceeds the pressure in the delivery duct 9 and therefore causes the check valve 19 to open. In this configuration, not shown in the attached drawings, the fuel flows through the compression chamber 25, the resilient member 31, the annular chamber 38, the apertures 39, the resilient member 28, the sleeve 40, and the fuel delivery duct 9.

The present invention offers various advantages, such as a reduction in the number of components to be assembled, the fitting of a single valve unit for each compression chamber, and the possibility of forming the delivery ducts outside the pump housing and thus providing a pump housing which is free of intersections between the high-pressure delivery ducts. This technical solution enables the pump housing to be made with steels which are less costly than those used at the present time.

With reference to the variant shown in Figure 4, the numeral 50 indicates a valve unit in which the parts resembling those of the valve unit 10 of Figure 2 are indicated by the same reference numerals. In fact, the only substantial changes from the valve unit 10 of Figure 2 are that the plug 27 is replaced with a plug 51 which is formed by a ball, and that the plug 30 is replaced with a plug 52 which is also formed by a ball.

By using balls as plugs, the length of the valve body 18 and the width of the valve body 18 can be reduced, and the channels 47 along the supply connecting duct 26 (Figure 2) can be dispensed with. In general, the reduction of the dimensions of the valve body 18 makes it possible to reduce the use of expensive steel, and consequently the cost of the whole pump.

It will also be clear that the present invention can be varied without departure from the protective scope defined by the attached claims.

## Claims

1. Valve unit for controlling the supply and delivery of fuel to and from a compression chamber (7) of a high-pressure piston pump (1), the valve unit (10) comprising a valve body (18); a first check valve (19) having a first valve seat (21) which extends along a first axis (A1), being formed in said valve body (18), and adapted to connect to the compression chamber (7) and to a fuel delivery duct (9); a second check valve (20) having a second valve seat (22) which extends along a second axis (A2), being formed in said valve body (18), and adapted to connect to the compression chamber (7) and to a fuel supply duct (8); a first connecting duct (25) formed in said valve body (18) and adapted to put the compression chamber (7), the first valve seat (21), and the second valve seat (22) in communication, said valve unit being **characterized in that** the second valve seat (22) extends transversely with respect to the first connecting duct (25) and partially, through the first connecting duct (25).

2. Valve unit according to Claim 1, in which the first and second valve seats (21, 22) are formed in the valve body (18) in such a way that they communicate with each other.

3. Valve unit according to any one of the preceding claims, in which the valve body (18) has an elongated and cylindrical shape about the first axis (A1), the first and second axes (A1, A2) preferably being perpendicular to each other.

4. Valve unit according to any one of the preceding claims, in which the first valve seat (21) is delimited at least partially by a first cylindrical face (33) parallel to the first axis (A1) and a first bearing face (34) transverse to the first axis (A1).

5. Valve unit according to Claim 4, comprising a first plug (27; 51) which is movable along the first axis (A1) in the first valve seat (21), and a resilient member (28) for pushing the first plug (27;51) that it bears against the first bearing face (34).

6. Valve unit according to Claim 5, in which the first plug (51) is a ball.

7. Valve unit according to Claim 5, in which the first plug (27) comprises a first guide portion (35) which can slide along the first cylindrical face (33), a first plug portion (36) which can be selectively positioned to bear against the first bearing face (34), and a recessed portion (37) which is positioned between the first guide portion (35) and the first plug portion (36) and which can form an annular chamber (38) between the first plug (27) and the first valve seat (21).

8. Valve unit according to Claim 7, in which the first plug (27) is cup-shaped and comprises at least one aperture (39) to make the annular chamber (38) communicate with a compartment inside the first plug (27).

9. Valve unit according to Claim 7, in which the first plug (27) is cup-shaped and has a seat for housing the resilient member (28).

10. Valve unit according to any one of Claims 5 to 9, comprising a locking member (29) fixed in the first valve seat (21) and positioned so as to preload the first resilient member (28) against the first plug (27; 51).

11. Valve unit according to Claim 10, in which the locking member (29) comprises a sleeve (40).

12. Valve unit according to Claim 10 or 11, in which the locking member (29) comprises a seat (41) for housing the resilient member (28).

13. Valve unit according to any one of Claims 10 to 12, in which the locking member (29) comprises stop means to limit the travel of the first plug (27).

14. Valve unit according to any one of Claims 10 to 13, in which the resilient member (28) is a helical spring housed partially in the first plug (27) and partially in the locking member (29).

15. Valve unit according to any one of the preceding claims, comprising a second connecting duct (26) for connecting the second valve seat (22) to the fuel supply duct (8).

16. Valve unit according to any one of the preceding claims, in which the second valve seat (22) is delimited at least partially by a second cylindrical face (42) parallel to a second axis (A2) and a second bearing face (43) transverse to the second axis (A2).

17. Valve unit according to Claim 16, comprising a second plug (30; 52) which is movable along the second axis (A2) in the second valve seat (22), and a second resilient member (31) for pushing the second plug (30; 52) so that it bears against the second bearing face (43).

18. Valve unit according to Claim 17, in which the second plug (52) is a ball.

19. Valve unit according to Claim 17, in which the second plug (30) comprises a second guide portion (44) which can slide along a second connecting duct (26) which extends along the second axis (A2), is formed in the valve body (18) and can connect the supply duct (8) to the second valve seat (22), and a second plug portion (45) which can be selectively positioned to bear against the second bearing face (43).

20. Valve unit according to any one of Claims 17 to 19, comprising a locking device (32) positioned in the second valve seat (22) so as to preload the resilient member (31) against the second plug (30; 52).

21. Valve unit according to Claim 20, in which the second locking device (32) comprises a sealing member (48) force-fitted in the second valve seat (22), and a spring support (49) which has apertures for the flow of the fuel, is force-fitted in the second valve seat (22), and is positioned between the second resilient member (31) and the sealing member (48).

22. Valve unit according to any one of Claims 17 to 21, in which the second resilient member (31) is a helical spring.

23. High-pressure piston pump for supplying fuel to an internal combustion engine, the piston pump (1) comprising a pump housing (2), a compression chamber (7) formed in the pump housing (2), a piston (3) which is movable in the pump housing (2), and a valve unit (10; 50) according to any one of the preceding claims, said valve unit (10; 50) being attached to said pump housing (2) in the proximity of the compression chamber (7).

24. High-pressure piston pump according to Claim 23, in which the pump housing (2) comprises a seat (13) for housing the valve unit (10; 50), said housing seat (13) communicating with said compression chamber (7).

25. High-pressure piston pump according to Claim 24, in which the valve body (18) has a face (24) for partially delimiting the compression chamber (7).

26. High-pressure piston pump according to any one of Claims 23 to 25, comprising a delivery duct (9) which is connected directly to the valve unit (10; 50) and extends outside the pump housing (2).

27. High-pressure piston pump according to any one of Claims 23 to 26, in which the compression chamber (7) extends along a third axis (B1), said first axis (A1) being parallel to and preferably coinciding with the third axis (B1).

## Patentansprüche

1. Ventileinheit zum Steuern der Zufuhr und Abgabe von Kraftstoff zu und aus einem Verdichtungsraum (7) einer Hochdruckkolbenpumpe (1), wobei die Ventileinheit (10) einen Ventilkörper (18); ein erstes Rückschlagventil (19) mit einem ersten Ventilsitz (21), der sich entlang einer ersten Achse (A1) erstreckt, wobei er in dem Ventilkörper (18) ausgebildet ist und zur Verbindung mit dem Verdichtungsraum (7) und mit einem Kraftstoffabgabekanal (9) ausgeführt ist; ein zweites Rückschlagventil (20) mit einem zweiten Ventilsitz (22), der sich entlang einer zweiten Achse (A2) erstreckt, wobei er in dem Ventilkörper (18) ausgebildet ist und zur Verbindung mit dem Verdichtungsraum (7) und einem Kraftstoffzufuhrkanal (8) ausgeführt ist; einen ersten Verbindungskanal (25), der in dem Ventilkörper (18) ausgebildet und dazu ausgeführt ist, eine Verbindung zwischen dem Verdichtungsraum (7), dem ersten Ventilsitz (21) und dem zweiten Ventilsitz (22) herzustellen, wobei die Ventileinheit **dadurch gekennzeichnet ist, dass** sich der zweite Ventilsitz (22) bezüglich des ersten Verbindungskanals (25) in Querrichtung und teilweise durch den ersten Verbindungskanal (25) erstreckt.

2. Ventileinheit nach Anspruch 1, wobei der erste und der zweite Ventilsitz (21, 22) so in dem Ventilkörper (18) ausgebildet sind, dass sie miteinander in Verbindung stehen.

3. Ventileinheit nach einem der vorhergehenden Ansprüche, wobei der Ventilkörper (18) eine langgestreckte und zylindrische Form um die erste Achse (A1) aufweist, wobei die erste und die zweite Achse (A1, A2) vorzugsweise senkrecht zueinander verlaufen.

4. Ventileinheit nach einem der vorhergehenden Ansprüche, wobei der erste Ventilsitz (21) zumindest teilweise durch eine erste zylindrische Fläche (33) parallel zur ersten Achse (A1) und eine erste Anlagefläche (34) quer zur ersten Achse (A1) begrenzt wird.

5. Ventileinheit nach Anspruch 4, die einen ersten Stopfen (27; 51), der entlang der ersten Achse (A1) in dem ersten Ventilsitz (21) beweglich ist, und ein elastisches Glied (28) zum Drücken des ersten Stopfens (27; 51) derart, dass er an der ersten Anlagefläche (34) anliegt, umfasst.

6. Ventileinheit nach Anspruch 5, wobei der erste Stopfen (51) eine Kugel ist.

7. Ventileinheit nach Anspruch 5, wobei der erste Stopfen (27) einen ersten Führungsteil (35), der entlang der ersten zylindrischen Fläche (33) gleiten kann, einen ersten Stopfenteil (36), der selektiv zur Anlage an der ersten Anlagefläche (34) positioniert werden kann, und einen ersten ausgesparten Teil (37), der zwischen dem ersten Führungsteil (35) und dem ersten Stopfenteil (36) positioniert ist und der zwischen dem ersten Stopfen (27) und dem ersten Ventilsitz (21) eine ringförmige Kammer (38) bilden kann, umfasst.

8. Ventileinheit nach Anspruch 7, wobei der erste Stopfen (27) schalenförmig ist und mindestens eine Öffnung (39) zur Verbindung der ringförmigen Kammer (38) mit einer Kammer innerhalb des ersten Stopfens (27) umfasst.

9. Ventileinheit nach Anspruch 7, wobei der erste Stopfen (27) schalenförmig ist und einen Sitz zur Aufnahme des elastischen Glieds (28) aufweist.

10. Ventileinheit nach einem der Ansprüche 5 bis 9, die ein Verriegelungsglied (29) umfasst, das im ersten Ventilsitz (21) fixiert ist und zur Vorbelastung des ersten elastischen Glieds (28) gegen den ersten Stopfen (27; 51) positioniert ist.

11. Ventileinheit nach Anspruch 10, wobei das Verriegelungsglied (29) eine Hülse (40) umfasst.

12. Ventileinheit nach Anspruch 10 oder 11, wobei das Verriegelungsglied (29) einen Sitz (41) zur Aufnahme des elastischen Glieds (28) umfasst.

13. Ventileinheit nach einem der Ansprüche 10 bis 12, wobei das Verriegelungsglied (29) ein Anschlagmittel zur Begrenzung des Hubs des ersten Stopfens (27) umfasst.

14. Ventileinheit nach einem der Ansprüche 10 bis 13, wobei das elastische Glied (28) eine Schraubenfeder ist, die teilweise im ersten Stopfen (27) und teilweise im Verriegelungsglied (29) untergebracht ist.

15. Ventileinheit nach einem der vorhergehenden Ansprüche, die einen zweiten Verbindungskanal (26) zur Verbindung des zweiten Ventilsitzes (22) mit dem Kraftstoffzufuhrkanal (8) umfasst.

16. Ventileinheit nach einem der der vorhergehenden Ansprüche, wobei der zweite Ventilsitz (22) durch eine zweite zylindrische Fläche (42) parallel zu einer zweiten Achse (A2) und einer zweiten Anlagefläche (43) quer zur zweiten Achse (A2) zumindest teilweise begrenzt wird.

17. Ventileinheit nach Anspruch 16, die einen zweiten Stopfen (30; 52), der entlang der zweiten Achse (A2) im zweiten Ventilsitz (22) beweglich ist, und ein zweites elastisches Glied (31) zum Drücken des zweiten Stopfens (30; 52) derart, dass er an der zweiten Anlagefläche (43) anliegt, umfasst.

18. Ventileinheit nach Anspruch 17, wobei der zweite Stopfen (52) eine Kugel ist.

19. Ventileinheit nach Anspruch 17, wobei der zweite Stopfen (30) einen zweiten Führungsteil (44), der entlang einem zweiten Verbindungskanal (26) gleiten kann, der sich entlang der zweiten Achse (A2) erstreckt, in dem Ventilkörper (18) ausgebildet ist und den Zufuhrkanal (8) mit dem zweiten Ventilsitz (22) verbinden kann, und einen zweiten Stopfenteil (45), der selektiv zur Anlage an der zweiten Anlagefläche (43) positioniert werden kann, umfasst.

20. Ventileinheit nach einem der Ansprüche 17 bis 19, die eine Verriegelungsvorrichtung (32) umfasst, die dahingehend im zweiten Ventilsitz (22) positioniert ist, das elastische Glied (31) gegen den zweiten Stopfen (30; 52) vorzubelasten.

21. Ventileinheit nach Anspruch 20, wobei die zweite Verriegelungsvorrichtung (32) ein Dichtungsglied (48), das im zweiten Ventilsitz (22) eingepresst ist, und eine Federstütze (49), die Öffnungen für den Kraftstofffluss aufweist, im zweiten Ventilsitz (22) eingepresst ist und zwischen dem zweiten elastischen Glied (31) und dem Dichtungsglied (48) positioniert ist, umfasst.

22. Ventileinheit nach einem der Ansprüche 17 bis 21, wobei das zweite elastische Glied (31) eine Schraubenfeder ist.

23. Hochdruckkolbenpumpe zur Zufuhr von Kraftstoff zu einer Brennkraftmaschine, wobei die Kolbenpumpe (1) ein Pumpengehäuse (2), einen im Pumpengehäuse (2) ausgebildeten Verdichtungsraum (7), einen Kolben (3), der in dem Pumpengehäuse (2) beweglich ist, und eine Ventileinheit (10; 50) nach einem der vorhergehenden Ansprüche umfasst, wobei die Ventileinheit (10; 50) in der Nähe des Verdichtungsraums (7) am Pumpengehäuse (2) befestigt ist.

24. Hochdruckkolbenpumpe nach Anspruch 23, wobei das Pumpengehäuse (2) einen Sitz (13) zur Aufnahme der Ventileinheit (10; 50) umfasst, wobei der Gehäusesitz (13) mit dem Verdichtungsraum (7) in Verbindung steht.

25. Hochdruckkolbenpumpe nach Anspruch 24, wobei der Ventilkörper (18) eine Fläche (24) zur teilweisen Begrenzung des Verdichtungsraums (7) aufweist.

26. Hochdruckkolbenpumpe nach einem der Ansprüche 23 bis 25, die einen Abgabekanal (9) umfasst, der direkt mit der Ventileinheit (10; 50) verbunden ist und sich außerhalb des Pumpengehäuses (2) erstreckt.

27. Hochdruckkolbenpumpe nach einem der Ansprüche 23 bis 26, wobei sich der Verdichtungsraum (7) entlang einer dritten Achse (B1) erstreckt, wobei die erste Achse (A1) parallel zur dritten Achse (B1) verläuft und vorzugsweise damit zusammenfällt.

## Revendications

1. Unité de soupape servant à la commande de l'apport et de la distribution de carburant à et depuis une chambre de compression (7) d'une pompe à piston haute pression (1), l'unité de soupape (10) comprenant un corps de soupape (18) ; une première soupape anti-retour (19) comportant un premier siège de soupape (21) qui s'étend le long d'un premier axe (A1), étant formé dans ledit corps de soupape (18), et conçu pour être raccordé à la chambre de compression (7) et à un conduit de distribution de carburant (9) ; une seconde soupape anti-retour (20) comportant un second siège de soupape (22) qui s'étend le long d'un deuxième axe (A2), étant formé dans ledit corps de soupape (18), et conçu pour être raccordé à la chambre de compression (7) et à un conduit d'apport de carburant (8) ; un premier conduit de raccordement (25) formé dans ledit corps de soupape (18) et conçu pour mettre la chambre de compression (7), le premier siège de soupape (21) et le second siège de soupape (22) en communication, ladite unité de soupape étant **caractérisée en ce que** le second siège de soupape (22) s'étend transversalement par rapport au premier conduit de raccordement (25) et partiellement à travers le premier conduit de raccordement (25).

2. Unité de soupape selon la revendication 1, dans laquelle les premier et second sièges de soupape (21, 22) sont formés dans le corps de soupape (18) de telle sorte qu'ils communiquent l'un avec l'autre.

3. Unité de soupape selon l'une quelconque des revendications précédentes, dans laquelle le corps de soupape (18) présente une forme allongée et cylindrique autour du premier axe (A1), les premier et deuxième axes (A1, A2) étant de préférence perpendiculaires l'un à l'autre.

4. Unité de soupape selon l'une quelconque des revendications précédentes, dans laquelle le premier siège de soupape (21) est délimité au moins partiellement par une première face cylindrique (33) parallèle au premier axe (A1) et une première face d'appui (34) transversale vis-à-vis du premier axe (A1).

5. Unité de soupape selon la revendication 4, comprenant un premier obturateur (27 ; 51) qui est mobile le long du premier axe (A1) dans le premier siège de soupape (21), et un élément élastique (28) servant à pousser le premier obturateur (27 ; 51) de telle sorte qu'il vienne en appui contre la première surface d'appui (34).

6. Unité de soupape selon la revendication 5, dans laquelle le premier obturateur (51) est une bille.

7. Unité de soupape selon la revendication 5, dans laquelle le premier obturateur (27) comprend une première partie de guidage (35) qui peut coulisser le long de la première face cylindrique (33), une première partie d'obturation (36) qui peut être positionnée, de manière sélective, de façon à être en appui contre la première face d'appui (34), et une partie évidée (37) qui est positionnée entre la première partie de guidage (35) et la première partie d'obturation (36) et qui peut former une chambre annulaire (38) entre le premier obturateur (27) et le premier siège de soupape (21).

8. Unité de soupape selon la revendication 7, dans laquelle le premier obturateur (27) est en forme de godet et comprend au moins une ouverture (39) de façon à mettre la chambre annulaire (38) en communication avec un compartiment à l'intérieur du premier obturateur (27).

9. Unité de soupape selon la revendication 7, dans laquelle le premier obturateur (27) est en forme de godet et comporte un siège destiné à recevoir l'élément élastique (28).

10. Unité de soupape selon l'une quelconque des revendications 5 à 9, comprenant un élément de blocage (29) fixé dans le premier siège de soupape (21) et positionné de façon à précharger le premier élément élastique (28) contre le premier obturateur (27 ; 51).

11. Unité de soupape selon la revendication 10, dans laquelle l'élément de blocage (29) comprend un manchon (40).

12. Unité de soupape selon la revendication 10 ou 11, dans laquelle l'élément de blocage (29) comprend un siège (41) destiné à recevoir l'élément élastique (28).

13. Unité de soupape selon l'une quelconque des revendications 10 à 12, dans laquelle l'élément de blocage (29) comprend un moyen d'arrêt afin de limiter le déplacement du premier obturateur (27).

14. Unité de soupape selon l'une quelconque des revendications 10 à 13, dans laquelle l'élément élastique (28) est un ressort hélicoïdal logé partiellement dans le premier obturateur (27) et partiellement dans l'élément de blocage (29).

15. Unité de soupape selon l'une quelconque des revendications précédentes, comprenant un second conduit de raccordement (26) servant à raccorder le second siège de soupape (22) au conduit d'apport de carburant (8).

16. Unité de soupape selon l'une quelconque des revendications précédentes, dans laquelle le second siège de soupape (22) est délimité au moins partiellement par une seconde face cylindrique (42) parallèle à un deuxième axe (A2) et une seconde face d'appui (43) transversale vis-à-vis du deuxième axe (A2).

17. Unité de soupape selon la revendication 16, comprenant un second obturateur (30 ; 52) qui est mobile le long du deuxième axe (A2) dans le second siège de soupape (22), et un second élément élastique (31) servant à pousser le second obturateur (30 ; 52) de telle sorte qu'il vienne en appui contre la seconde face d'appui (43).

18. Unité de soupape selon la revendication 17, dans laquelle le second obturateur (52) est une bille.

19. Unité de soupape selon la revendication 17, dans laquelle le second obturateur (30) comprend une seconde partie de guidage (44) qui peut coulisser le long d'un second conduit de raccordement (26) qui s'étend le long du deuxième axe (A2), est formé dans le corps de soupape (18) et peut raccorder le conduit d'apport (8) au second siège de soupape (22), et une seconde partie d'obturation (45) qui peut être positionnée, de manière sélective, de façon à être en appui contre la seconde face d'appui (43).

20. Unité de soupape selon l'une quelconque des revendications 17 à 19, comprenant un dispositif de blocage (32) positionné dans le second siège de soupape (22) de façon à précharger l'élément élastique (31) contre le second obturateur (30 ; 52) .

21. Unité de soupape selon la revendication 20, dans laquelle le second dispositif de blocage (32) comprend un élément d'étanchéité (48) emmanché à force dans le second siège de soupape (22), et un support de ressort (49) qui comporte des ouvertures pour l'écoulement du carburant, est emmanché à force dans le second siège de soupape (22), et est positionné entre le second élément élastique (31) et l'élément d'étanchéité (48).

22. Unité de soupape selon l'une quelconque des revendications 17 à 21, dans laquelle le second élément élastique (31) est un ressort hélicoïdal.

23. Pompe à piston haute pression servant à apporter du carburant à un moteur à combustion interne, la pompe à piston (1) comprenant un carter de pompe (2), une chambre de compression (7) formée dans le carter de pompe (2), un piston (3) qui est mobile dans le carter de pompe (2) et une unité de soupape (10 ; 50) selon l'une quelconque des revendications précédentes, ladite unité de soupape (10 ; 50) étant fixée audit carter de pompe (2) à proximité de la chambre de compression (7) .

24. Pompe à piston haute pression selon la revendication 23, dans laquelle le carter de pompe (2) comprend un siège (13) destiné à recevoir l'unité de soupape (10 ; 50), ledit siège de carter (13) communiquant avec ladite chambre de compression (7).

25. Pompe à piston haute pression selon la revendication 24, dans laquelle le corps de soupape (18) comporte une face (24) servant à délimiter partiellement la chambre de compression (7) .

26. Pompe à piston haute pression selon l'une quelconque des revendications 23 à 25, comprenant un conduit de distribution (9) qui est raccordé directement à l'unité de soupape (10 ; 50) et s'étend à l'extérieur du carter de pompe (2).

27. Pompe à piston haute pression selon l'une quelconque des revendications 23 à 26, dans laquelle la chambre de compression (7) s'étend le long d'un troisième axe (B1), ledit premier axe (A1) étant parallèle au troisième axe (B1) et coïncidant de préférence avec celui-ci.
